Europäisches Patentamt

**European Patent Office**

Office européen des brevets

(19)

(11) Veröffentlichungsnummer: **0 140 218**
**B1**

(12) # EUROPÄISCHE PATENTSCHRIFT

(45) Veröffentlichungstag der Patentschrift:
04.01.89

(21) Anmeldenummer: 84112007.4

(22) Anmeldetag: 06.10.84

(51) Int. Cl.⁴: **C 01 B 17/66**

(54) **Stabilisierte, inerte organische Flüssigkeiten enthaltende Natriumdithionitzubereitungen und deren Verwendung.**

(30) Priorität: 14.10.83 DE 3337388

(43) Veröffentlichungstag der Anmeldung:
08.05.85 Patentblatt 85/19

(45) Bekanntmachung des Hinweises auf die Patenterteilung:
04.01.89 Patentblatt 89/1

(84) Benannte Vertragsstaaten:
BE CH DE FR GB IT LI NL SE

(56) Entgegenhaltungen:
DE-A-1 220 399
DE-A-1 226 992
DE-C-171 362
GB-A-695 375
US-A-3 689 895

**Die Akte enthält technische Angaben, die nach dem Eingang der Anmeldung eingereicht wurden und die nicht in dieser Patentschrift enthalten sind.**

(73) Patentinhaber: BASF Aktiengesellschaft, Carl-Bosch- Strasse 38, D-6700 Ludwigshafen (DE)

(72) Erfinder: Appl, Max, Dr., Berliner Strasse 12, D-6701 Dannstadt- Schauernheim (DE)
Erfinder: Dal Molin, Gerhard, Am Huettenwingert 15, D-6706 Wachenheim (DE)
Erfinder: Goesele, Wilhelm, Dr., Mandelring 19, D-6706 Wachenheim (DE)
Erfinder: Schreiner, Siegfried, Dr., Mohnstrasse 39, D-6700 Ludwigshafen (DE)
Erfinder: Treiber, Gert, Dr., Richard- Wagner-Strasse 63, D-6520 Worms 1 (DE)

EP 0 140 218 B1

**Beschreibung**

Vorliegende Erfindung betrifft organische Flüssigkeiten enthaltende Natriumdithionitzubereitungen, die stabilisiert sind und nicht zur Selbstentzündung neigen und die darüber hinaus bei der Verwendung als Reduktions- oder Bleichmittel, z. B. in der Holzschliffbleiche, leicht handhabbar und dosierbar sind.

Natriumdithionit, das häufig auch als Natriumhydrosulfit bezeichnet wird, ist im Sinne der Transportvorschriften in die Klasse der selbstentzündlichen Gefahrengüter einzureihen. Es wird in großen Mengen in der chemischen Technik eingesetzt, z. B. in der Papierindustrie zum Bleichen von Holzschliff, oder in der Textilindustrie als Reduktionsmittel beim Färben.

Wasserfreies Natriumdithionit ist zwar in geschlossenen Gebinden weitgehend lagerbeständig, es zersetzt sich jedoch sehr rasch bei der Einwirkung von Wasser oder Feuchtigkeit. Auch bei Zutritt von schon geringen Mengen Wassers im Bereich von 3 bis 10 Gew.-% wird durch Hydratation eine Erwärmung und Zersetzung des Produktes bewirkt. Bei dieser Zersetzung wird unter weiterer Wärmeentwicklung Schwefel frei, der bei Temperaturen über 210°C mit dem im Kristallhaufwerk vorhandenen Luftsauerstoff reagiert und unter Flammenbildung abbrennt. Bei einem solchen Brand entwickeln sich erhebliche Mengen an Schwefeldioxid, durch das die Transportgebinde zum Bersten gebracht werden und dadurch der Zutritt von weiterem Luftsauerstoff ermöglicht wird.

Zur Verminderung dieser Risiken hat man daher häufig das stabilere Zinkdithionit eingesetzt, jedoch wird die Verwendung dieses Produktes aus Gründen des Umweltschutzes in zunehmendem Maße zurückgedrängt.

Um die Zersetzlichkeit und Selbstentzündlichkeit des Natriumdithionits zu verringern ist es bekannt, dieses durch Verschnitt mit inerten Substanzen zu verdünnen. Als Verdünnungsmittel sind bereits die verschiedensten Substanzen bekannt geworden, wie alkalisch reagierende Salze, z. B. Natriumcarbonat, Natriumphosphat, Natriumpolyphosphate, Harnstoff oder trockene Pulver aus leicht löslichen synthetischen Polymerisaten (GE-B-1 220 399 und DE-B-1 226 992).

In der US-A-1 810 663 werden des weiteren Natriumdithionithaltige Zubereitungen beschrieben, bei denen das Natriumdithionit mit einer im wesentlichen wasserunlöslichen Substanz umhüllt ist. Als solche Substanzen werden Öl, Fette und Wachse genannt. Zusätzlich hierzu ist in die Umhüllung ein Emulgiermittel eingearbeitet, das die Aufgabe hat, beim Lösen in Wasser die umhüllende Substanz zu emulgieren.

In der GB-A-695 375 werden flüssige Ester mit niedriger Flüchtigkeit, die sich von Alkoholen mit mehr als 5 C-Atomen ableiten, als Umhüllungsmittel angegeben. Diese Ester sollen nur in solchen Mengen angewandt werden, daß die Fließbarkeit des Dithionits nicht wesentlich beeinträchtigt wird.

Alle auf dem Markt befindlichen, stabilisierten, festen Natriumdithionit-Zubereitungen konnten das Sicherheitsbedürfnis der verarbeitenden Industrie nicht vollständig zufriedenstellen, abgesehen davon, daß sich diese pulverförmigen Produkte nur schwierig handhaben lassen. Die Dosierung dieser Produkte wird beeinträchtigt durch die unterschiedliche Rieselfähigkeit von in den Produkten enthaltenen Fein- und Grobanteilen. Die Feinanteile erschweren darüber hinaus die Verarbeitung dieser Produkte durch die lästige Staubentwicklung, die durch weitere Zusatzstoffe unterdrückt oder durch zusätzliche apparative Einrichtungen eliminiert werden muß. Beides bedeutet für die Verarbeitung solcher pulverförmigen Zubereitungen eine Erschwerung.

Aus diesen Gründen wird in den letzten Jahren in zunehmendem Maße Natriumdithionit in der Weise erzeugt, daß der Anwender selbst wässerige Lösungen von Natriumdithionit durch Umsetzung von Natriumborhydrid, Natronlauge und Schwefeldioxid erzeugt. Diese Methode ist aber durch eine umständliche Nebenfabrikation eines Einsatzstoffes beim Anwender belastet, ganz abgesehen davon, daß sich Bor in den Fabrikationsabwässern befindet, die aus Gründen des Umweltschutzes nicht ohne weiteres abgelassen werden können, ohne daß das Bor vorher aus diesen Abwässern entfernt wird.

Die oben beschriebenen Nachteile der pulverförmigen Natriumdithionitzubereitungen können teilweise umgangen werden durch den Einsatz wässeriger Natriumdithionit-Lösungen. Sie haben jedoch den Nachteil, daß sie nur innerhalb eines begrenzten Zeitraumes von etwa 4 Wochen ab der Herstellung der Lösung stabil sind, was aber nur durch Kühlen auf Temperaturen unter 10°C, Luftausschluß und Alkalischstellen der Lösung erreicht wird. Aus diesem Grunde können solche Lösungen nur bei relativ geringen Entfernungen zwischen Hersteller und Anwender eingesetzt werden.

In der DE-C-171 362 ist ein Verfahren zur Herstellung von haltbaren, kristallwasserfreien Hydrosulfiten beschrieben, indem man die kristallwasserhaltigen Salze in fester Form oder als Pasten mit hochprozentiger Alkalilauge bzw. festen Ätzalkali behandelt. Das erhaltene wasserfreie Salz kann getrocknet und mit indifferenten Mitteln wie Alkohol, Glycerin, Alkalilauge usw. zu einer Paste angeteigt werden. Nähere Angaben über die Zusammensetzung dieser Pasten sind nicht angegeben.

In der US-A-3 839 217 ist ferner eine homogene, gießbare, chemisch und physikalisch beständige Dispersion eines wasserlöslichen Dithionits in einer Flüssigkeit beschrieben, die einen pH-Wert von > 6,5, eine Viskosität von < 50 000 Centipoise (50 Pa.s) und einen Dithionitgehalt von 20 bis 45 Gew.-% aufweist. Als Flüssigkeiten kommen Mischungen von mit Wasser mischbaren organischen Flüssigkeiten oder auch organische Flüssigkeiten alleine in Betracht.

Der vorliegenden Erfindung lag daher die Aufgabe zugrunde, eine Natriumdithionitzubereitung bereitzustellen, die einerseits gegenüber Luftsauerstoff und Wasser stabilisiert ist und die andererseits die Probleme bei der Handhabung sowohl der pulverförmigen als auch der flüssigen Natriumdithionit-Einstellungen vermeidet.

2

Es wurde gefunden, daß diese Aufgabe bei stabilisierten, organischen Flüssigkeiten enthaltenden Natriumdithionitzubereitungen dadurch gelöst wird, daß die Zubereitung die Konsistenz einer pumpfähigen Paste aufweist und 77 bis 90 Gewichtsprozent Natriumdithionit enthält.

Die erfindungsgemäßen Pasten weisen Viskositäten von 1 bis 1500, vorzugsweise von 40 bis 200 Pa.s auf (bestimmt im Couette-Rheometer bei 20°C und einer Schergeschwindigkeit von 10.s$^{-1}$ (vgl. Praktische Rheologie der Kunststoffschmelzen und -lösungen, M.H. Pahl VDI-Verlag, Buch Nr. ISBN 3-18-404097-6). Hydrosulfithaltige Pasten dieser Viskosität lassen sich bei ihrer Anwendung problemlos mit Spezialpumpen bzw. Spezialdosiereinrichtungen fördern und dosieren. Als organische Flüssigkeiten kommen praktisch alle Flüssigkeiten in Betracht, die gegenüber Natriumdithionit inert sind, d.h. die nicht wie Aldehyde oder Ketone mit Natriumdithionit reagieren. Besonders geeignete Flüssigkeiten sind Alkohole mit 1 bis 8 C-Atomen sowie flüssige Kohlenwasserstoffe, Äther und Ester. Als Alkohole seien nicht nur die einwertigen Alkohole, sondern auch mehrwertige Alkohole wie Glycerin oder insbesondere Glykol genannt. Selbstverständlich lassen sich auch Gemische von Alkoholen einsetzen wie das sogenannte Oxoöl, das aus einem Gemisch von aliphatischen Alkoholen besteht und das als Nebenprodukt bei der Oxosynthese bei der Herstellung von $C_9$- bis $C_{10}$-Alkoholen anfällt.

Auch flüssige Kohlenwasserstoffe sind geeignet. Es eignen sich selbstverständlich nicht nur die reinen Kohlenwasserstoffe, sondern auch Kohlenwasserstoffgemische wie sie bei Raffinerien anfallen, z. B. leichtes Heizöl oder Fahrbenzin.

Bei der Herstellung der erfindungsgemäßen Pasten sind solche Lösungsmittel vorzuziehen, die einen relativ hohen Siedepunkt bzw. Siedebereich von über 80°C haben, um die Brandgefahr infolge leichter Entflammbarkeit herabzusetzen.

Bei der Herstellung der erfindungsgemäßen Pasten wird das pulverförmige Natriumdithionit mit der jeweiligen organischen Flüssigkeit in einem Intensivmischer zu einer Paste mit der gewünschten Viskosität verarbeitet. Die Viskosität der Paste hängt nicht nur von der Viskosität der gewählten organischen Flüssigkeit ab, sondern auch von der Korngrößenverteilung des eingesetzten Natriumdithionits. Diese Korngrößenverteilung hängt u.a. auch von dem Herstellungsverfahren des Natriumdithionits ab.

So besitzt z. B. ein Natriumdithionit, das nach dem Amalgamverfahren hergestellt worden ist, eine mittlere Korngröße von 160 μm, dagegen ein nach dem Formiatverfahren hergestelltes eine mittlere Korngröße von 95 μm. Bei gleichen Mengen an Natriumdithionit muß bei dem Letzteren, das durch eine kleinere mittlere Korngröße gekennzeichnet ist, eine größere Menge an einer speziellen organischen, inerten Flüssigkeit eingesetzt werden als bei dem nach dem Amalgamverfahren hergestellten Dithionit mit einem im Schnitt gröberem Material, um zu Pasten mit den gleichen Viskositäten zu gelangen. Wie in den unten angeführten Beispielen veranschaulicht, kann die jeweils benötigte Menge an inerter organischer Flüssigkeit in Abhängigkeit von dem eingesetzten Natriumdithionit in beträchtlichem Maße variieren.

Die erfindungsgemäßen Pasten können nach einer gewissen Lagerzeit oder auch durch Rütteln beim Transport sich u.U. teilweise entmischen, was sich durch Ausscheiden einer geringen Menge der Flüssigkomponente bemerkbar macht. Die als dünne Schicht auf der Paste aufschwimmende Flüssigkeit kann jedoch ohne Schwierigkeiten mechanisch wieder in die Paste eingearbeitet werden.

Um diesen Absetzeffekt zu verhindern, ist es aber einfacher, der Paste ein Dispergierhilfsmittel oder ein Verdickungsmittel in geringen Mengen von z. B. bis zu ca. 2 Gew.-% zuzusetzen.

Die Herstellung der Pasten ist mit einer Verdichtung des Produktes verbunden, wobei die Pasten spezifische Gewichte von 1,9 kg/l und darüber erreichen. Gerade auf diesen Effekt ist die bemerkenswerte Stabilität der erfindungsgemäßen Pasten gegenüber der Einwirkung von Wasser zurückzuführen. Bei Zutritt von geringen Wassermengen, die bei pulverförmigen Produkten eine rasche Zersetzung und Selbstentzündung bewirken, wird die Paste von dem Wasser überschichtet. Eine Vermengung beider Phasen ist ohne erheblichen mechanischen Aufwand nicht möglich und selbst beim Erwärmen auf z. B. 80°C konnten keine gefährlichen Zersetzungserscheinungen des in der Paste enthaltenen Natriumdithionits registriert werden.

Auch gegenüber der Einwirkung von Luftsauerstoff sind die erfindungsgemäßen Pasten wesentlich stabiler als die bisher bekannten pulverförmigen Zubereitungen. Dies ist auf den nahezu völligen Ausschluß von Luftsauerstoff zurückzuführen, was einerseits bedingt ist durch die geringe Löslichkeit des Sauerstoffs in der organischen Komponente, andererseits zurückzuführen ist auf die Unterbindung von Konvektionsströmungen in der Paste selbst.

Auf die günstigen Eigenschaften bei der Verarbeitung der Pasten aufgrund ihrer guten Förderbarkeit und Dosierbarkeit ist weiter oben schon hingewiesen worden.

Die erfindungsgemäßen Pasten eignen sich als Reduktionsmittel und können überall dort eingesetzt werden, wo auch pulverförmige Natriumhydrosulfit enthaltende pulverförmige Zubereitungen eingesetzt werden, z. B. in der Holzschliffbleiche und als Reduktionsmittel, z. B. in der Küpenfärberei.

**Beispiele**

Bei allen Versuchen wurde in einem Intensivmischer 20 kg pulverförmiges Natriumhydrosulfit mit verschiedenen Flüssigkeiten und Zusatzstoffen zu einer Paste homogenisiert und gleichzeitig verdichtet. In der nachfolgenden Tabelle 1 sind die entsprechenden Komponenten sowie die zugehörigen Gewichtsprozente aufgeführt.

Die in der Tabelle unter A) aufgeführten Pasten wurden mit einem Natriumdithionit hergestellt, das nach dem Amalgamverfahren erhalten worden ist und eine mittlere Korngröße von 160 μm, während die unter B aufgeführten Pasten mit einem nach dem Formiatverfahren hergestellten Dithionit erhalten worden sind mit einer mittleren Korngröße von 95 μm.

**Tabelle 1**

Teil A, Hydrosulfit nach dem Amalgamverfahren

| Nr. | Hydrosulfit Gew.-% | Flüssigkeitskomponenten (n) | Gew.-% | Dispergier-hilfsmittel +) | Gew.-% | Viskosität der Paste (Pa.s) |
|---|---|---|---|---|---|---|
| 1 | 83 | Glykol | 17 | - | | ca. 5 |
| 2 | 87 | " | 13 | - | | ca. 50 |
| 3 | 89 | " | 11 | - | | ca. 1000 |
| 4 | " | " | 10,5 | 1 | 0,5 | " |
| 5 | " | " | " | 2 | " | " |
| 6 | " | " | " | 3 | " | ca. 60 |
| 7 | " | " | " | 4 | " | ca. 60 |
| 8 | " | " | " | 5 | " | ca. 800 |
| 9 | 85 | " | " | 6 | " | ca. 1000 |
| 10 | 89 | " | " | 7 | " | ca. 800 |
| 11 | 90 | " | " | 9 | " | ca. 60 |
| 12 | 87 | Propandiol | 13 | - | | " |
| 13 | " | Diäthylenglykol | " | - | | " |
| 14 | " | Triäthylenglykol | " | - | | " |
| 15 | " | Butandiol-1,4 | " | - | | " |
| 16 | 89 | Methanol | 11 | - | | " |
| 17 | " | Ethanol | " | - | | " |
| 18 | 90 | Ethanol/Wasser-Azeotrop | 10 | - | | ca. 80 |
| 19 | 89 | Ethanol | 10,5 | 3 | 0,5 | ca. 200 |
| 20 | " | " | " | 5 | " | ca. 500 |
| 21 | " | Propanol-1 | 11 | - | | ca. 60 |
| 22 | " | 1-Butanol | 12 | - | | " |
| 23 | " | " | 10,5 | 3 | 0,5 | " |
| 24 | 89 | " | " | 1 | " | " |
| 25 | 90 | " | 10 | 8 | 1 | " |
| 26 | 89 | Pentanol-1 | 11 | - | | " |
| 27 | " | Hexanol-1 | " | - | | " |
| 28 | " | " | " | - | | " |
| 29 | " | Oxoöl 910, | " | - | | " |
| 30 | " | " | 10,5 | 3 | 0,5 | ca. 200 |
| 31 | 90 | " | 9 | 8 | 1 | ca. 60 |
| 32 | 85 | leichtes Heizöl | 15 | - | | " |
| 33 | 85 | leichtes Heizöl | 14,5 | 7 | 0,5 | " |
| 34 | 88 | " | 11 | 8 | 1 | " |
| 35 | 85 | Paraffinöl, Kp. 180-200°C | 15 | - | | " |
| 36 | 88 | " | 11 | 8 | " | " |
| 37 | 85 | Ethylenglykol-monoethylether | 15 | - | | " |
| 38 | " | Ethylenglykol-monomethylether | " | - | | " |
| 39 | " | Diethylenglykol | " | - | | " |
| 40 | " | Triethylenglykol | " | - | | " |
| 41 | " | Triethylenglykol-monobutylether | " | - | | " |
| 42 | 83 | Essigsäure-n--butylester | 17 | - | | " |
| 43 | " | Essigsäure-iso-butylester | " | - | | " |
| 44 | 81 | Ethylglykolacetat | 19 | - | | " |
| 45 | " | Butylglykolacetat | " | - | | " |

Teil B, Hydrosulfit nach dem Formiatverfahren

| Nr. | Hydrosulfit Gew.-% | Flüssigkeitskomponenten (n) | Gew.-% | Dispergier-hilfsmittel +) | Gew.-% | Viskosität der Paste (Pa.s) | |
|---|---|---|---|---|---|---|---|
| 1 | 79 | Glykol | 21 | - | | ca. | 60 |
| 2 | 82 | " | 20 | 8 | | | " |
| 3 | 81 | Ethanol | 19 | - | | ca. | 80 |
| 4 | " | 1-Butanol | " | - | | | " |
| 5 | " | Oxoöl 910 | " | - | | ca. | 60 |
| 6 | 77 | leichtes Heizöl | 23 | - | | | " |

+) s. Tab. 2

**Tabelle 2**

1 Polyethylenoxid MG 600
2 Mischpolymerisat Polyethylenoxid-Polypropylenoxid, MG 1000
3 $C_{18}$-Alkohol-$C_{25}$-Ethoxilat
4 Dioctylnatriumsulfosuccinat
5 Polyacrylsäure, MG 50 000
6 Polyacrylsäure, Na-Salz, MG 50 000
7 Copolymerisat Maleinsäureanhydrid-Diisobutylen- MG 12 000
8 Anlagerungsprodukt aus 7 Mol Ethylenoxid u. 1 Mol $C_{12}$ bis $C_{14}$-Alkoholschnitt

**Patentansprüche**

1. Stabilisierte, inerte organische Flüssigkeiten enthaltende Natriumdithionit-Zubereitungen, dadurch gekennzeichnet, daß die Zubereitung die Konsistenz einer pumpfähigen Paste aufweist und 77 bis 90 Gew.-% Natriumdithionit enthält.

2. Natriumdithionitzubereitungen nach Anspruch 1, dadurch gekennzeichnet, daß sie eine Viskosität von 1 bis 1 500 Pa.s aufweisen.

3. Natriumdithionitzubereitungen nach Ansprüchen 1 bis 2, dadurch gekennzeichnet, daß sie als organische Flüssigkeiten Alkohole, Ester, Ether und/oder Kohlenwasserstoffe enthalten.

4. Verwendung der Pasten nach Ansprüchen 1 bis 3 als Reduktions- und Bleichmittel.

**Claims**

1. A stabilized sodium dithionite formulation containing inert organic liquids, wherein the formulation has the consistency of a pumpable paste and contains from 77 to 90 % by weight of sodium dithionate.

2. A sodium dithionite formulation as claimed in claim 1, which has a viscosity of from 1 to 1500 Pa.s.

3. A sodium dithionite formulation as claimed in claim 1 or 2, which contains, as organic liquids, alcohols, esters, ethers and/or hydrocarbons.

4. Use of a paste as claimed in claim 1 or 2 or 3 as a reducing and bleaching agent.

**Revendications**

1. Préparations stabilisées de dithionite de sodium contenant des liquides organiques inertes, caractérisées en ce que la préparation présente la consistance d'une pâte pompable et contient de 77 à 90 % en poids de dithionite de sodium.

2. Préparations de dithionite de sodium selon la revendication 1, caractérisées en ce qu'elles présentent une viscosité de 1 à 1500 Pa.s.

3. Préparations de dithionite de sodium selon l'une ou l'autre des revendications 1 et 2, caractérisées en ce qu'elles contiennent comme liquides organiques des alcools, des esters, des éthers et/ou des hydrocarbures.

4. Utilisation des pâtes selon l'une quelconque des revendications 1 à 3, comme milieux de réduction et de blanchiment.